# EUROPÄISCHE PATENTSCHRIFT

(11) **EP 1 921 722 B1**
(45) Veröffentlichungstag und Bekanntmachung des Hinweises auf die Patenterteilung: **04.12.2013**
(21) Anmeldenummer: 07020784.0
(22) Anmeldetag: 24.10.2007
(51) Int. Cl.: H02B 1/30

(54) **Schaltschrank für eine elektrische Installationsverteilung**
Switching cabinet for an electrical installation distribution system
Armoire électrique pour distribution électrique

(30) Priorität: 10.11.2006 DE 102006053358
(43) Veröffentlichungstag der Anmeldung: 14.05.2008
(73) Patentinhaber: ABB AG, 68309 Mannheim (DE)
(72) Erfinder: Lott, Günther, 77839 Lichtenau (DE)

(56) Entgegenhaltungen:
- EP-A- 1 583 192
- DE-U1- 20 315 619
- US-A- 5 584 406
- US-A1- 2003 146 011

## Beschreibung

Die Erfindung betrifft einen Schaltschrank für eine elektrische Installationsverteilung gemäß dem Oberbegriff des Anspruches 1.

Schaltschränke der Eingangs genannten Art, die für die elektrische Installationsverteilung verwendet werden, besitzen im Allgemeinen ein Rahmengestell, das aus vier vertikal verlaufenden Rahmenstangen und die vier Rahmenstangen an den freien Enden miteinander verbindenden Querrahmenstangen zusammengesetzt ist. Zur Bildung des Schaltschrankes werden an den vertikalen und horizontalen Rahmenstangen beziehungsweise Querrahmenstangen Seitenwände, eine Rückwand, eine Boden- und eine Deckwand angeschraubt, wobei zusätzlich eine Frontwand vorgesehen ist, die als Tür dient. Das Rahmengestell bildet somit eine vorgefertigte Einheit und wird zum fertigen Schaltschrank mit den Wänden, die als Blechteile ausgebildet sind, vervollständigt. Gegebenenfalls besteht die Möglichkeit, dass zwischen den vertikal verlaufenden Rahmenstangen im Bereich der Front- und der Rückwand zusätzliche vertikale Rahmenstangen eingesetzt werden, die dann an den horizontal verlaufenden Rahmenstangen oder Querrahmenstangen befestigt werden. Die Rahmenstangen sind üblicherweise als Biegeprofilstangen mit eingebrachten Löchern ausgebildet.

Die Herstellung eines Rahmengestelles und damit die Herstellung eines Schaltschrankes ist wegen der Vorfertigung des Rahmengestelles aufwendig.

In der US 5,584,406 ist ein "Gestellrahmen" mit vier Seitenstützen beschrieben, an denen eine Boden- und Deckwand sowie Seitenwände angebracht sind.

Aus der EP 1 583 192 A1) ist ein elektrischer Verteilerschrank bekannt, der mit Öffnungen für die Hindurchführung von Kabeln versehen ist. Dieser Schrank weist vier aus Blechprofilen bestehende vertikale Stützen auf, an denen Platten als Seitenwände angeschraubt sind. Ober- und Unterseite des Verteilerschranks sind ebenfalls von Platten gebildet, die jeweils mit den Stützen verbunden sind.

Aus der US 2003/0146011 A1 ist ein "Gehäuse zur Aufnahme elektrischer und/oder elektronischer Einbauten" mit zueinander parallel angeordneten Boden- und Deckwand bekannt, wobei die Boden- und Deckwand mittels vertikal zu den Abdeckungsebenen verlaufenden Profilschenkeln miteinander verbunden sind. Diese Profilschenkel sind als Strang- Pressprofil-Abschnitte ausgebildet und mit einstückig angeformten, hinterschnittenen Nuten versehen, in welche Nutensteine mit Innengewinde einsetzbar sind, um eine Befestigungsmöglichkeit für Seitenwände und dergleichen zu bieten.

Ausgehend von diesem Stand der Technik ist es Aufgabe der Erfindung, einen Schaltschrank der eingangs genannten Art zu schaffen, der in der Herstellung gegenüber den bekannten Schaltschränken vereinfacht ist.

Diese Aufgabe wird erfindungsgemäß durch die Merkmale des Anspruches 1 gelöst.

Erfindungsgemäß ist somit vorgesehen, dass jede Rahmenstange eine Mehreckvollprofilform oder eine Mehreckhohlprofilform, vorzugsweise eine Viereckprofilform, aufweist, auf deren Längsseitenflächen die in Längsrichtung verlaufenden Nuten eingebracht sind, die schlitzförmig, L-förmig und/oder T-förmig ausgebildet sind und dass zwischen den Nuten oder Schlitzen und/oder zwischen den Schlitzen längs verlaufende Hohlräume vorgesehen sind, die zur Gewichtserleichterung der Rahmenstange dienen.

Dabei sind die Rahmenstangen lediglich vertikal angeordnet und mittels der Bodenund Deckwand in ihrer Lage gehalten. Ferner sind die Rahmenstangen vorzugsweise aus Vollmaterial hergestellt und besitzen Längsnuten, insbesondere zur Aufnahme der Vertikalkanten der Seitenwände und/oder der Rückwand.

Außerdem ist jede Rahmenstange Viereckprofilform ausgebildet, wobei in die Außenflächen der Viereckprofilform die in Längsrichtung verlaufenden Nuten eingebracht sind, die in bevorzugter Weise die Nuten schlitzförmig, L- und/oder T-förmig ausgebildet sein können.

Ferner ist auch die Möglichkeit genutzt, in der Rahmenstange in Längsrichtung verlaufende Hohlräume vorzusehen, die dann zur Gewichtsverringerung der Rahmenstange dienen.

Bei einer bevorzugten Ausführungsform, bei der das Profil jeder Rahmenstange ein Viereck, insbesondere ein quadratisches Profil aufweist, ist je wenigstens eine schlitzförmige Nut an zwei parallel zueinander verlaufenden, in entgegengesetzte Richtung liegenden ersten Seitenflächen angeordnet; die schlitzförmigen Nuten sind dann in entgegen gesetzter Richtung offen.

Dabei können die wenigstens einen schlitzförmigen Nuten in einer ersten Ebene liegen, die gemäß einer weiteren vorteilhaften Ausgestaltung durch die Längserstreckungsmittelachse der Rahmenstange verläuft. Zusätzlich können weitere schlitzförmige Nuten in einer zweiten Ebene liegen, die nahe einer senkrecht zur ersten Seitenfläche verlaufenden zweiten Seitenfläche liegt, wobei die erste und die zweite Ebene parallel zueinander verlaufen.

In besonders vorteilhafter Weise können auf der der zweiten Fläche entgegengesetzt liegenden dritten Seitenfläche, die senkrecht zu den ersten Seitenflächen verläuft, die L- und/oder T-förmigen Nuten eingebracht sein.

Dabei besteht die Möglichkeit, dass der Steg der T-förmigen Nut in einer dritten Ebene liegt, die senkrecht zur ersten und zweiten Ebene durch die Längserstreckungsmittelachse der Rahmenstange verläuft.

In bevorzugter Weise können die L-förmigen Nuten jeweils beidseitig zu der T-förmigen Nut in die dritte Seitenfläche eingebracht sein, wobei die Schenkel der L-Form zur T-förmigen Nut hinweisen und in der dritten Ebene des Quersteges der T-förmigen Nut liegen.

Zur Befestigung der Boden- und Deckwand und damit zur Fixierung der Rahmenstangen zueinander im Schaltschrank ist an den entgegengesetzten Stirnflächen jeder Rahmenstange je eine Bohrung zur Aufnahme eines Befestigungselements, zum Beispiel einer Schraube, vorgesehen.

Weitere vorteilhafte Ausgestaltungen der Erfindung sowie weitere Vorteile sind den weiteren Unteransprüchen zu entnehmen.
Die weitere Darlegung der Erfindung erfolgt anhand einiger Figuren und Ausführungsbeispiele. Anhand der Zeichnungen werden die Erfindung sowie einige Anwendungsvarianten der Erfindung und weitere vorteilhafte Ausgestaltungen und Verbesserungen sowie weitere Vorteile der Erfindung näher erläutert und beschrieben.

Es zeigen
- Fig. 1: eine perspektivische Ansicht einer Schaltanlage, teilweise geöffnet,
- Fig. 2: eine perspektivische Ansicht einer weiteren Variante der Schaltanlage gemäß Fig. 1, ebenfalls teilweise geöffnet,
- Fig. 3: eine dritte Variante einer Schaltanlage ohne Frontwand sowie ohne Boden- und Deckwand,
- Fig. 4: eine perspektivische Ansicht einer Rahmenstange,
- Fig. 5: eine detaillierte Ansicht eines Teiles der Rahmenstange gemäß Fig. 4, nicht gemäss der Erfindung,
- Fig. 6: eine perspektivische Darstellung einer Rahmenstange gemäß Fig. 5, nicht gemäss der Erfindung
- Fig. 7: eine perspektivische Ansicht einer Rahmenstange mit eingefügten Bauelementen, nicht gemäss der Erfindung,
- Fig. 8 und 9: zwei Varianten einer Schaltanlage in Zwischenmontageschritten und
- Fig. 10: eine perspektivische Darstellung einer weiteren Ausführungsform einer Rahmenstange.

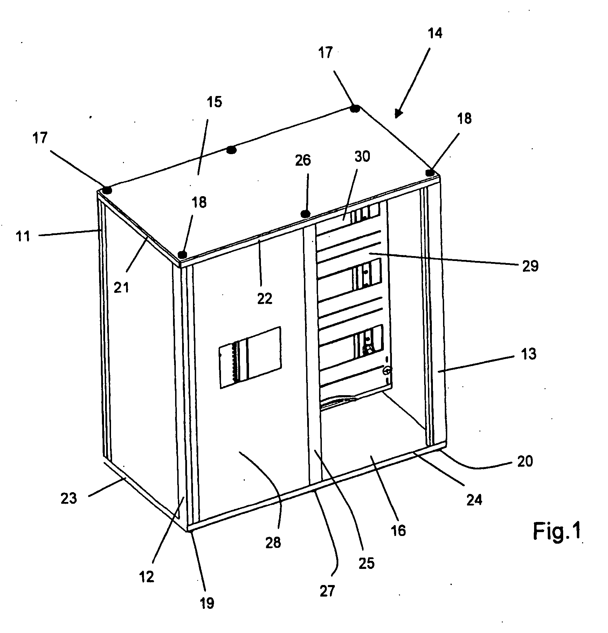

Die Schaltanlage 10 gemäß Fig. 1 besitzt vier vertikal verlaufende Rahmenstangen 11, 12, 13, wobei die vierte Rahmenstange bei Pfeil 14 angeordnet und in der Zeichnung Fig. 1 verdeckt ist. Die Rahmenstangen 11 bis 14 sind mit einer Deckwand 15 und einer Bodenwand 16 mit Schraubenverbindungen 17, 18 für die Deckwand 15 sowie Schraubverbindung 19, 20 für die Bodenwand 16 fixiert und in ihrer räumlichen Lage gehalten. Die Deckwand 15 und die Bodenwand 16 sind napfförmig ausbildet, wobei an den Seitenkanten L-förmig hochgebogene Schenkel 21, 22, 23, 24 vorgesehen sind, die einen geringen Abschnitt der Längserstreckung der Rahmenstangen 11 bis 14 an ihren Stirnflächen übergreifen und dabei zur Führung der Rahmenstangen 11 bis 14 bezogen auf die Bodenwand 16 und die Deckwand 15 dienen.

Bei der Ausführung gemäß Fig. 1 sind weitere vertikale Rahmenstangen 25 etwa in der Mitte des Schaltschrankes vorgesehen, die ebenfalls mittels Schraubenverbindungen 26,27 mit der Deckwand 15 beziehungsweise mit der Bodenwand 16 verbunden sind. In der Fig. 1 ist lediglich die vordere Rahmenstange 25 zu erkennen; die hintere Rahmenstange ist von einer Fronttür 28 verdeckt.

Der rechts der Rahmenstange 25 befindliche Bereich der Vorderseite ist offen, so dass eine im Hintergrund, also im Bereich der Rückwand (die ebenfalls nicht sichtbar ist) angebrachte Verteilerabdeckung 29 sichtbar ist, die Schlitze 30 zur Aufnahme beispielsweise von Leitungsschutzschaltern aufweist, so dass diese durch die Schlitze 30 hindurchgreifen beziehungsweise durch die Schlitze 30 hindurch zugänglich sind.

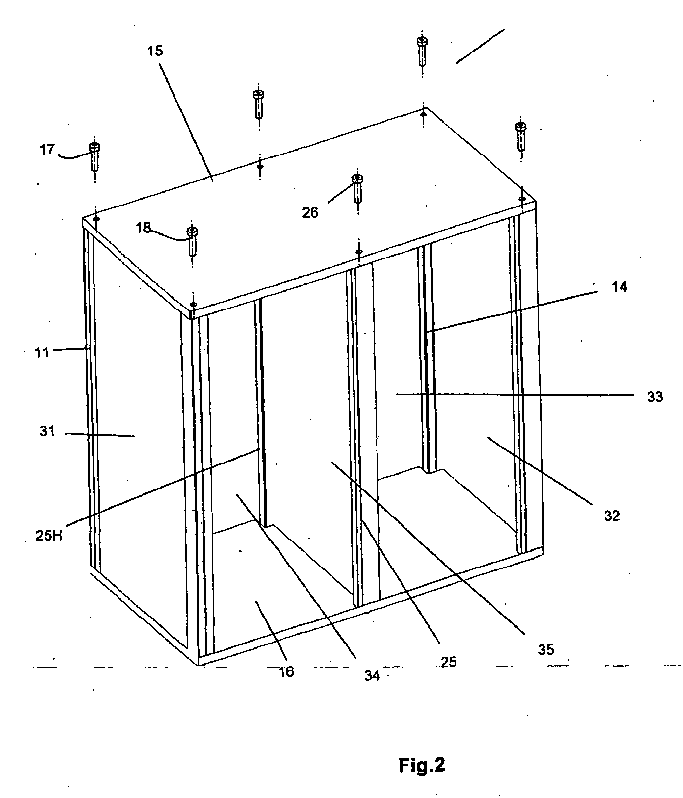

Die Darstellung gemäß Fig. 2 zeigt den Schaltschrank 10 ohne Fronttür und Frontwand sowie ohne Einbauten, wobei die Schraubenverbindungen 17, 18 und 26 noch nicht vorhanden sind. In der Fig. 1 und in der Fig. 2 sind Seitenwände 31, 32 sowie Rückwände 33, 34 sichtbar, wobei zwischen den Rahmenschenkeln 25 und 25H (das H bedeutet hintere Rahmenstange) eine Zwischenwand 35 eingesetzt ist, die beidseitig der Rahmenstangen 25, 25H befindliche Schaltschrankräume voneinander trennt.

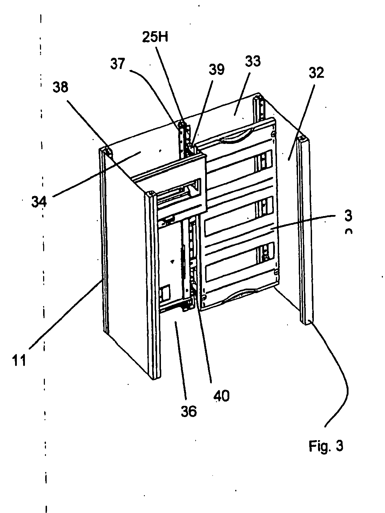

Bei der Darstellung nach Fig. 3 sind die Boden- und Deckenwand sowie die Frontwände weggelassen; man erkennt im rechten Bereich, also rechts der Rahmenstange 25H die Abdeckung 30 und links davon einen Zählerplatz 36, der über nicht näher dargestellte Befestigungselemente an mit Aufnahmebohrungen versehene Halte- oder Lochstangen 37 und 38, die in weiter unten dargestellter Weise mit den Rahmenstangen 25H und 11 verbunden sind, befestigt ist. Die Fixierung der Abdeckung 30 erfolgt über geeignete Füße 39, 40 (die Füße auf der rechten Seite der Abdeckung 30 sind verdeckt), die an den Lochstangen 37, 38 entsprechenden Lochstangen (ohne Bezugsziffer) befestigt sind.

Als innere Komponenten, das heißt als Einbaukomponenten, können alle Arten von Komponenten verwendet werden, die für eine elektrische Installationsverteilung notwendig sind. Die Einbaukomponenten jedoch sind für die Erfindung nicht von Bedeutung.

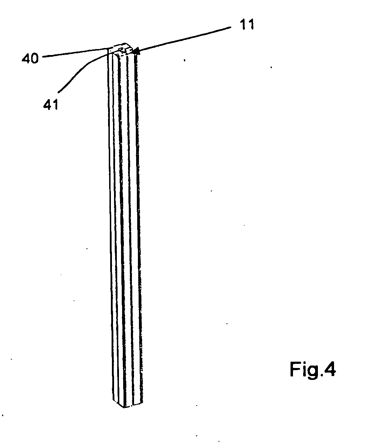

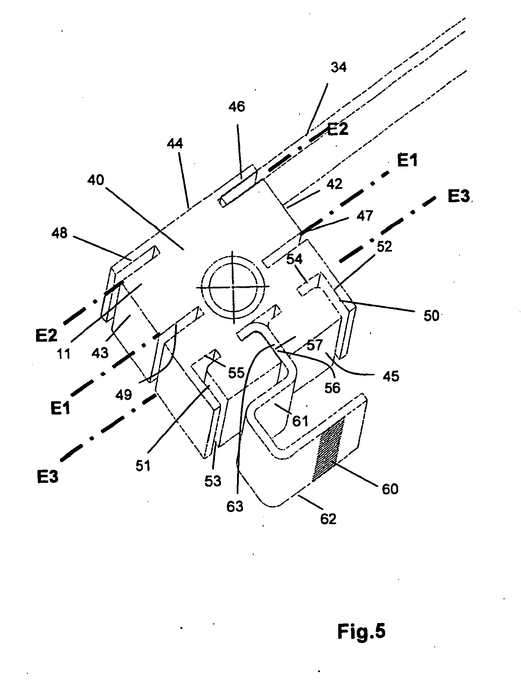

Die Fig. 4 zeigt eine perspektivische Darstellung beispielsweise der Rahmenstange 11, wobei die Rahmenstange 12 ... gleich ausgebildet sind. Die Rahmenstange 11 gemäß Fig. 4 ist aus einem Vollmaterial hergestellt und besitzt an ihren Seitenflächen Nuten, die anhand der Fig. 5 näher erläutert werden sollen. An der dem Betrachter zugewandten Stirnfläche 40 der Rahmenstange 11, in die die durchgängigen Nuten auch einmüden, ist eine Bohrung 41 vorgesehen, in die die Schraubenverbindungen 17, 18 eingeschraubt werden können. Auf der dem Betrachter abgewandten Stirnfläche der Rahmenstange 11 ist in gleicher Weise eine Bohrung vorgesehen, in die die Schraubverbindungen 19, 20, 27 eingeschraubt werden können.

Aus der Fig. 4 ist ersichtlich, dass die Rahmenstange 11 aus einem Vollmaterial hergestellt ist. Es besteht natürlich auch die Möglichkeit, die Rahmenstange, was hier nicht dargestellt ist, aus Blechmaterial durch Abkantung und Biegung oder auf jede andere Weise herzustellen, wobei ein Vollprofil vermieden ist. Wesentlich ist, dass die Rahmenstange viereckig, vorzugsweise quadratisch ist und an den entsprechenden Stellen, wie sie die Rahmenstange 11 der Fig. 4 aufweist, mit Nuten versehen ist (siehe weiter unten, Beschreibung zur Fig. 4).

Es sei nun Bezug genommen auf die Fig. 5. Die Fig. 5 zeigt einen abgeschnittenen Teilbereich der Rahmenstange im Querschnitt. Die Rahmenstange besitzt zwei parallel verlaufende, in entgegengesetzter Richtung liegende erste Seitenflächen 42, 43, die sich mit einer zweiten Seitenfläche 44 und einer dritten Seitenfläche 45 zu einem Viereck, vorzugsweise einem Quadrat, wie es hier dargestellt ist, ergänzen.

In den ersten Seitenflächen 42, 43 sind schlitzförmige Nuten 46, 47 sowie 48, 49 eingebracht, wobei die schlitzförmigen Nuten 46, 48 beziehungsweise 47, 49 in einer Ebene liegen, die senkrecht zu den ersten Seitenflächen 43 und 42 und parallel zu der zweiten Seitenfläche 44.beziehungsweise der dritten Seitenfläche 45 verlaufen. Die Nuten 46, 48 befinden sich nahe der zweiten Seitenfläche 44, wogegen die Nuten 47, 49 in einer Ebene E₁-E₁ liegen, die durch die Längserstreckungsmittelachse der Rahmenstange 11 verläuft. Die Ebene E₂-E₂ in der sich die Nuten 46, 48 befinden, verläuft parallel zur Ebene E₁-E₁ und parallel zu der zweiten Seitenfläche 44.

Die dritte Seitenfläche 45, die parallel zu der zweiten Seitenfläche 44 und senkrecht zu den ersten Seitenflächen 42, 43 verläuft, besitzt zwei L-förmige Nutzen 50 und 51, deren längere Schenkel 52, 53 parallel zu den Seitenflächen 42, 43 verlaufen; die kürzeren Schenkel 54, 55 verlaufen senkrecht dazu und aufeinander zu in einer dritten Ebene E₃-E₃, die parallel zu den beiden Ebenen E₁-E₁ beziehungsweise E₂-E₂ verläuft. Die Nuten 50, 51 münden mit ihren längeren Schenkeln 52, 53 in die dritte Seitenfläche 45 ein. Sie befinden sich dabei in der Nähe der ersten Seitenfläche 42, 43.

Etwa mittig zwischen den L-förmigen Nuten 50, 51 ist eine T-förmige Nut 56 eingebracht, deren Längssteg 57 senkrecht zur dritten Seitenfläche 45 in diese einmündet; der Quersteg 58, der senkrecht zu dem Längssteg 57 verläuft, liegt in der Ebene der kürzeren Schenkel 54, 55.

Die Fig. 5 zeigt, dass in die Nut 46 die Rückwand 34, von der nur ein Teil dargestellt ist, eingefügt ist, wogegen in die T-förmige Nut 56 ein Z-förmiges Halteelement 60 eingesetzt ist, das einen mittleren Z-Steg 61 besitzt, an dessen einen Ende sich ein L-förmiger Fortsatz 62 und an dessen anderem Ende ein ebenfalls L-förmiger Fortsatz 63 anschließt; die Schenkel der L-Form der Fortsätze 62 und 63 springen in entgegengesetzte Richtung vor und der Fortsatz 63 ist der Form der T-förmigen Nut 56 angepasst, so dass das Trägerteil 62 in die Nut 56 von der Stirnfläche 40 der Rahmenstange 11 eingeschoben werden kann. Das Teil 60 könnte beispielsweise als Lochstange 37, 38 ausgebildet sein. In der Fig. 5 ist lediglich ein Teilbereich der Rahmenstange 11 beziehungsweise ein Teilbereich des Halteteils 62 sowie ein Teilbereich der Seitenwandung 34 sichtbar beziehungsweise gezeichnet. Die Fig. 5 zeigt demgemäß ein Segment aus der Rahmenstange 11 der Fig. 4.

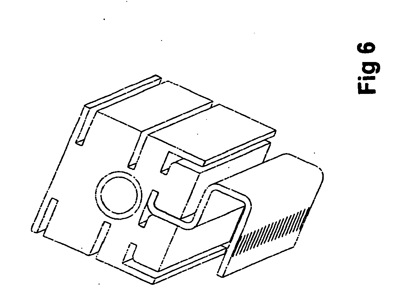

Gleiches zeigt auch die Fig. 6; nur ist dort das Segment in der Höhe größer gekennzeichnet.

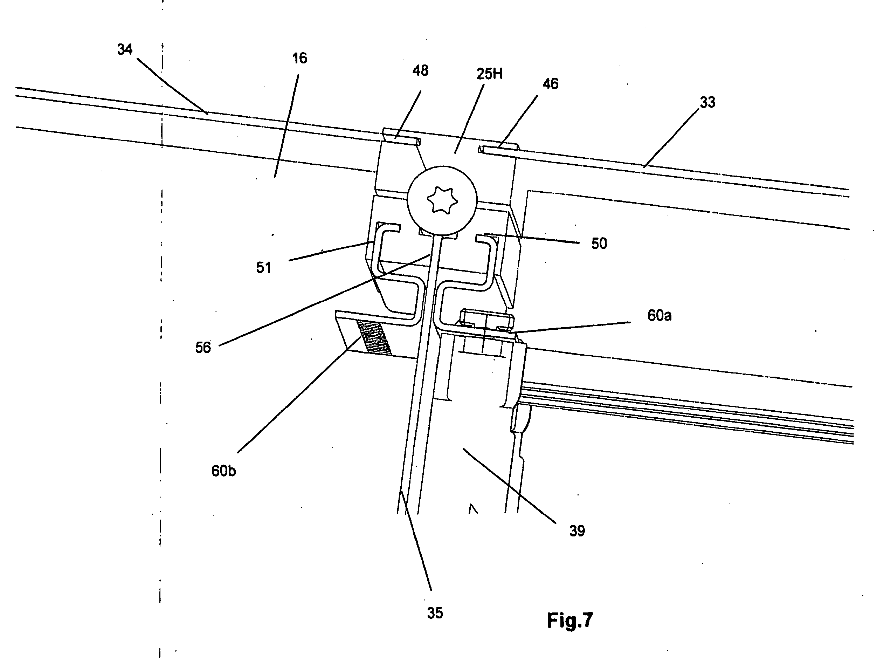

Es sei nun Bezug genommen auf die Fig. 7. Dort ist die Rahmenstange 25H gekennzeichnet und zwar im unteren Bereich, das heißt im Bereich der Bodenwand 16. In die hinten befindlichen Nuten beziehungsweise Schlitze 46 und 48 (hier werden die gleichen Bezugsziffern verwendet wie bei der Anordnung gemäß Fig. 5, weil der Aufbau der Rahmenstange 35H identisch dem Aufbau der Rahmenstange 11 entspricht) sind die Rückwandungen 33, 34 eingeschoben; in den Schlitz 56 (siehe Fig. 5) ist die Zwischenwand 35 eingefügt. In die L-förmigen Schlitze 50 und 51 sind zwei Trägerelemente 60a und 60b eingefügt, wobei die außenbefindlichen Schenkel von der Zwischenwand wegweisen.

An dem Trägerelement 60a ist ein Halteelement oder ein Träger angebracht, der dem Träger 39 entspricht und demgemäß hier die Bezugsziffer 39 erhalten hat. Die Fig. 7 soll hier lediglich zeigen, dass die Rahmenstange vielseitig verwendbar ist.

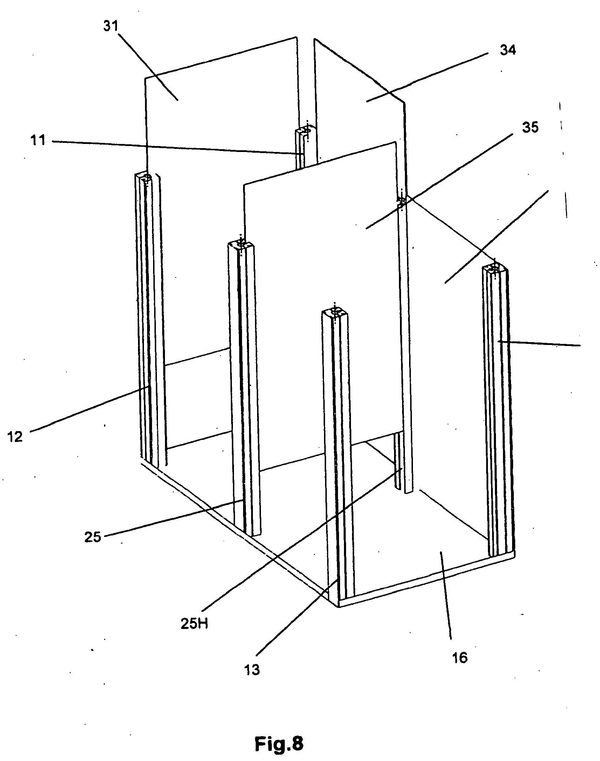

Die Fig. 8 zeigt einen Teil des Schaltschrankes 10 mit der Bodenwand 16, den Rahmenteilen 11, 12, 13 und 14 sowie den Rahmenteilen 25 und 25H. Die Seitenwandung 31, die Rückwand 34 und die Zwischenwand 35 sind teilweise in die entsprechenden Schlitze eingeschoben, wobei hier die Zwischenwand 31 in die entsprechenden Schlitze 46, 48 der Rahmenstangen 11, 12 eingefügt ist. Die Zwischenwand 35 wird in die mittlere Nut 56 eingefügt, und die hintere Rückwand 33 ist vollständig montiert, das heißt vollständig gegen die Bodenwand angeschlagen, indem sie in die entsprechenden Schlitze der Rahmenstangen 14, 25H eingefügt worden ist.

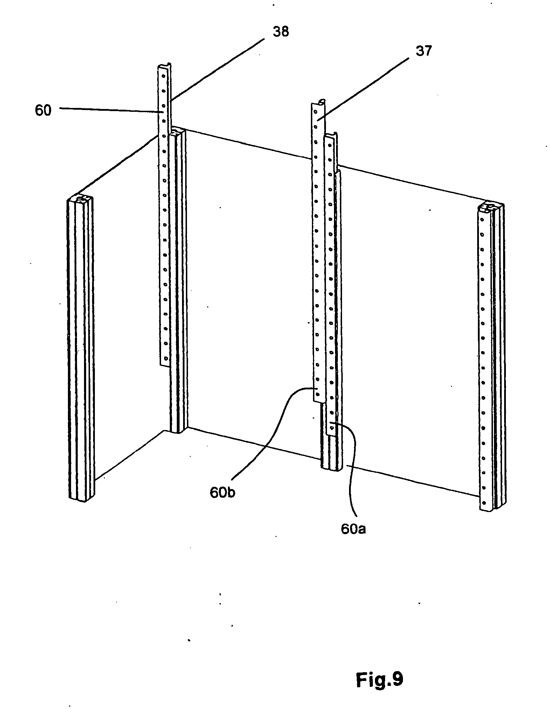

Die Fig. 9 zeigt Trägerelemente oder Trägerteile 60, die so eingesetzt sind, wie in der Fig. 5 dargestellt; damit die Bezugsziffern zu den Fig. 5 und 7 passen, sind außerdem noch die in der Fig. 3 eingetragenen Bezugsziffern 38 und 37 eingetragen. In den Fig. 5, 6 und 7 sind die Trägerelemente 60a und 60b beziehungsweise 60 wie Bandleiter in entsprechender Biegung gezeichnet; diese Bandleiter sind natürlich lang gestreckte Z-förmige Profile mit Lochreihen, um daran beispielsweise eine Abdeckung 30 oder Elemente eines Zählerplatzes 36 zu befestigen.

### Die Montage geschieht wie folgt:

Zunächst werden die Rahmenstangen 11, 12, ... auf der Innenseite der Bodenwand 16 befestigt. Sodann werden die Seitenwände, die Rückwände sowie die Zwischenwand von der Stirnseite oder Stirnfläche der Rahmenstangen 11, 12, ... in die dafür vorgesehenen Schlitze beziehungsweise Nuten eingefügt. Daran anschließend können die Trägerelemente 37, 38 beziehungsweise 60 in die entsprechenden Nuten eingefügt werden, wobei auch diese Stangen von den Stirnflächen der einzelnen Rahmenstangen in die in die Stirnflächen einmündenden Nuten eingeschoben werden.

Nachdem diejenigen Komponenten, die in die Nuten eingeschoben werden müssen, eingefügt sind, kann die Deckwand 15 auf die Stirnfläche der Rahmenstangen aufgelegt und damit verschraubt werden.

Nach der Montage dieser den Schaltschrank bildenden Komponenten können weitere Einbauteile, beispielsweise elektrische Komponenten wie Leitungsschutzschalter und der Gleichen, ein Zählerplatz und Abdeckungen eingesetzt werden.

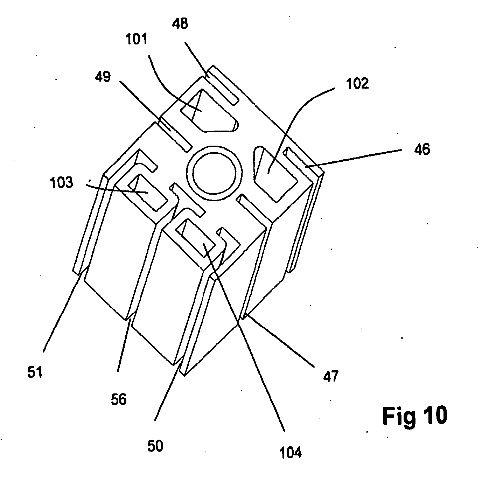

Die Rahmenstange 100 besitzt ähnlich wie die Rahmenstange 11 eine Viereckprofilform, hier eine quadratische Profilform mit den entsprechenden Nuten, die hier die gleichen Bezugsziffern aufweisen wie bei der Rahmenstange 11. Zwischen den Nuten 48, 49 und den Nuten 46, 47 befinden sich zwei in Längsrichtung verlaufende Hohlräume 101 und 102, die eine Trapezform aufweisen und symmetrisch einander zugeordnet sind. Zwischen den Nuten 51, 56 und den Nuten 56 und 50 sind ebenfalls Hohlräume 103 und 104 vorgesehen, so dass bei der Profilform der Rahmenstange 100 der Fig. 10 insgesamt vier Hohlräume 101, 102, 103, 104 vorgesehen sind, die sich in Längsrichtung der Rahmenstange 100 erstrecken und zur Gewichtsverringerung der Rahmenstange dienen.

**Bezugszeichenliste**

| | | | |
|---|---|---|---|
| 10 | Schaltanlage | 57 | Längssteg |
| 11, 12, 13 | Rahmenstangen | 58 | Quersteg |
| 14 | Pfeil | 60 | Z-förmiges Halteelement |
| 15 | Deckwand | 60a, 60b | Trägerelemente |
| 16 | Bodenwand | 61 | Z-Steg |
| 17, 18 | Schraubenverbindung | 62,63 | L-förmiger Fortsatz |
| 19, 20 | Schraubenverbindungen | 100 | Rahmenstange |
| 21 bis 24 | Schenkel | 101 bis 104 | Hohlräume |
| 25 | Rahmenstange | | |
| 26, 27 | Schraubenverbindungen | | |
| 28 | Fronttür | | |
| 29 | Verteilerabdeckung | | |
| 30 | Schlitze | | |
| 31, 32 | Seitenwände | | |
| 33,34 | Rückwände | | |
| 35 | Zwischenwand | | |
| 36 | Zählerplatz | | |
| 37, 38 | Lochstangen | | |
| 39,40 | Füße | | |
| 41 | Bohrung | | |
| 42, 43 | erste Seitenflächen | | |
| 44 | zweite Seitenfläche | | |
| 45 | dritte Seitenfläche | | |
| 46 bis 49 | schlitzförmige Nuten | | |
| 50, 51 | L-förmige Nuten | | |
| 52, 53 | längere Schenkel | | |
| 54, 55 | kürzere Schenkel | | |
| 56 | T-förmige Nut | | |

## Patentansprüche

1. Schaltschrank für eine elektrische Installationsverteilung mit vertikalen Rahmenstangen, an denen eine Boden-, eine Deck- und eine Rückwand,
Seitenwände und eine Frontwand gegebenenfalls mit Fronttür angebracht sind,
welche vertikalen Rahmenstangen mittels der Boden- und Deckwand in ihrer Lage zueinander gehalten sind, wobei jede Rahmenstange eine als Viereckprofilform ausgebildete
Mehreckhohlprofilform aufweist, deren Längsseitenflächen mit Längsnuten (46, 47, 48, 49, 50, 51, 56) zur Aufnahme der vertikalen Kanten der Seitenwände und der Rückwand versehen sind, wobei die in Längsrichtung verlaufenden Längs-Nuten schlitzförmig, L-förmig und/oder T-förmig ausgebildet sind, **dadurch gekennzeichnet, dass** zwischen den Längs-Nuten oder Schlitzen und/oder zwischen den Schlitzen längs verlaufende Hohlräume (101, 102, 103, 104) vorgesehen sind, die zur Gewichtserleichterung der Rahmenstange dienen.

2. Schaltanlage nach Anspruch 1, **dadurch gekennzeichnet, dass** je wenigstens eine schlitzförmige Nut (46, 47; 48, 49) an zwei ersten, parallel zueinander verlaufenden,
in entgegengesetzter Richtung liegenden Seitenflächen (42, 43) der Rahmenstange (11, 12, 13, 15; 25, 25H) angeordnet und in entgegengesetzter Richtung offen ist.

3. Schaltanlage nach Anspruch 2, **dadurch gekennzeichnet, dass** zwei schlitzförmige Nuten (47, 49) in einer erste Ebene (E1-E1) liegen.

4. Schaltanlage nach Anspruch 3, **dadurch gekennzeichnet, dass** die erste Ebene (E1-E1) durch die Längserstreckungsmittelachse der Rahmenstange (11,12,13,15; 25, 25H) verläuft.

5. Schaltanlage nach einem der vorherigen Ansprüche, **dadurch gekennzeichnet,**
**dass** zwei weitere Nuten (46, 48) in einer zweiten Ebene (E2-E2) liegen und in der Nähe einer senkrecht zu den ersten Seitenflächen (42, 43) verlaufenden zweiten Seitenfläche (44) liegt.

6. Schaltanlage nach Anspruch 5, **dadurch gekennzeichnet, dass** auf der der zweiten Seitenfläche (44) entgegengesetzt liegenden Seitenfläche (55) der Rahmenstange L-und/oder T-förmige Nuten (50, 51; 56) eingebracht sind.

7. Schaltanlage nach Anspruch 6, **dadurch gekennzeichnet, dass** der Stegabschnitt (77) der T-förmigen Nuten (56) in einer weiteren Ebene liegt,
die senkrecht zur ersten und zweiten Ebene und durch die Mittellängserstreckungsachse
der Rahmenstange (11, 12, 13, 15; 25, 25H) verläuft.

8. Schaltanlage nach Anspruch 7, **dadurch gekennzeichnet**, das die L-förmigen Nuten (50, 51) beidseitig zu der T-förrnigen Nut in die dritte Seitenfläche (45) eingebracht sind, wobei die Schenkel (54, 55) der L-förmigen Nuten (50, 51) zur T-förmigen Nut (56) hinweisen und in der Ebene liegen, in der der Quersteg (58) der T-förmigen Nut (56) liegt.

9. Schaltanlage nach einem der vorherigen Ansprüche, **dadurch gekennzeichnet, dass** an den entgegengesetzt liegenden Stirnflächen jeder Rahmenstange eine Bohrung (41) zur Aufnahme eines Befestigungselementes (17, 18; 26), wie zum Beispiel einer Schraube, vorgesehen sind.

10. Schaltschrank nach einem der vorherigen Ansprüche, **dadurch gekennzeichnet, dass** in wenigstens eine der L- oder T-förmigen Nuten (50, 51; 56) ein Trägerelement (60) einschiebbar ist, dessen eine Kante L-förmig abgewinkelt ist, so dass sie in die entsprechenden Nuten (50, 51; 56) einfügbar ist.

11. Schaltanlage nach Anspruch 10, **dadurch gekennzeichnet, dass** das Trägerelement (60) mit einer Lochreihe zur Befestigung von Komponenten für den Schaltschrank versehen ist.

## Claims

1. Switchgear cabinet for an electrical service distribution panel, having vertical frame rods on which a bottom, a top and a rear wall, side walls and a front wall, possibly with a front door, are fitted, which vertical frame rods are held in their position with respect to one another by means of the bottom and top walls, each frame rod having a polygonal hollow profiled shape in the form of a quadrilateral profiled shape, whose longitudinal side surfaces are provided with longitudinal grooves (46, 47, 48, 49, 50, 51, 56) for holding the vertical edges of the side walls and of the rear wall, the longitudinal grooves which run in the longitudinal direction being in the form of slots, L-shaped and/or T-shaped, **characterized in that** cavities (101, 102, 103, 104) are provided, which run longitudinally between the longitudinal grooves or slots and/or between the slots, and are used to reduce the weight of the frame rod.

2. Switchgear assembly according to Claim 1, **characterized in that** in each case at least one groove (46, 47; 48, 49), in the form of a slot, is arranged on two first side surfaces (42, 43), which run parallel to one another and are located in opposite directions, of the frame rod (11, 12, 13, 15; 25, 25H), and is open in the opposite direction.

3. Switchgear assembly according to Claim 2, **characterized in that** two grooves (47, 49) in the form of slots, lie on a first plane (E1-E1).

4. Switchgear assembly according to Claim 3, **characterized in that** the first plane (E1-E1) runs through the longitudinal extent centre axis of the frame rod (11, 12, 13, 15; 25, 25H).

5. Switchgear assembly according to one of the preceding claims, **characterized in that** two further grooves (46, 48) are located on a second plane (E2-E2), and in the vicinity of a second side surface (44) which runs at right angles to the first side surfaces (42, 43).

6. Switchgear assembly according to Claim 5, **characterized in that** L-shaped and/or T-shaped grooves (50, 51; 56) are incorporated on that side surface (55) of the frame rod which is opposite the second side surface (44).

7. Switchgear assembly according to Claim 6, **characterized in that** the web section (57) of the T-shaped grooves (56) is located on a further plane which runs at right angles to the first and second planes and through the centre longitudinal extent axis of the frame rod (11, 12, 13, 15; 25, 25H).

8. Switchgear assembly according to Claim 7, **characterized in that** the L-shaped grooves (50, 51) are incorporated in the third side surface (45) on both sides of the T-shaped groove, with the limbs (54, 55) of the L-shaped grooves (50, 51) pointing towards the T-shaped groove (56) and lying on the plane on which the transverse web (58) of the T-shaped groove (56) is located.

9. Switchgear assembly according to one of the preceding claims, **characterized in that** a hole (41) for holding an attachment element (17, 18; 26), such as a screw, is provided on the opposite end surfaces of each frame rod.

10. Switchgear cabinet according to one of the preceding claims, **characterized in that** a mount element (60), whose one edge is angled in an L-shape such that it can be inserted into the corresponding grooves (50, 51; 56), can be inserted into at least one of the L-shaped or T-shaped grooves (50, 51; 56).

11. Switchgear assembly according to Claim 10, **characterized in that** the mount element (60) is provided with a row of holes for attachment of components for the switchgear cabinet.

## Revendications

1. Armoire de commutation pour une distribution électrique d'installation, comprenant des montants de cadre verticaux sur lesquels sont montées une paroi de fond, une paroi de recouvrement et une paroi arrière, des parois latérales et une paroi avant, éventuellement avec une porte avant, lesquels montants de cadre verticaux sont maintenus en position les uns par rapport aux autres au moyen de la paroi de fond et de la paroi de recouvrement, chaque montant de cadre présentant une forme profilée creuse polygonale réalisée sous forme de forme profilée rectangulaire, dont les faces latérales longitudinales sont pourvues de rainures longitudinales (46, 47, 48, 49, 50, 51, 56) pour recevoir les bords verticaux des parois latérales et de la paroi arrière, les rainures longitudinales s'étendant dans la direction longitudinale étant réalisées en forme de fentes, en forme de L et/ou en forme de T, **caractérisée en ce que** des cavités (101, 102, 103, 104) s'étendant longitudinalement sont prévues entre les rainures longitudinales ou les fentes et/ou entre les fentes, lesquelles cavités servent à alléger le montant de cadre.

2. Installation de commutation selon la revendication 1, **caractérisée en ce qu'**à chaque fois au moins une rainure en forme de fente (46, 47 ; 48, 49) est disposée au niveau de deux premières faces latérales (42, 43), s'étendant parallèlement l'une à l'autre et situées dans une direction opposée, du montant de cadre (11, 12, 13, 15 ; 25, 25H) et est ouverte dans la direction opposée.

3. Installation de commutation selon la revendication 2, **caractérisée en ce que** deux rainures (47, 49) en forme de fentes sont situées dans un premier plan (E1-E1).

4. Installation de commutation selon la revendication 3, **caractérisée en ce que** le premier plan (E1-E1) s'étend à travers l'axe médian d'étendue longitudinale du montant de cadre (11, 12, 13, 15 ; 25, 25H).

5. Installation de commutation selon l'une quelconque des revendications précédentes, **caractérisée en ce que** deux autres rainures (46, 48) sont situées dans un deuxième plan (E2-E2) et se trouvent à proximité d'une deuxième surface latérale (44) s'étendant perpendiculairement aux premières surfaces latérales (42, 43).

6. Installation de commutation selon la revendication 5, **caractérisée en ce que** des rainures en forme de L et/ou de T (50, 51 ; 56) sont réalisées sur la surface latérale (55) du montant de cadre située à l'opposé de la deuxième surface latérale (44).

7. Installation de commutation selon la revendication 6, **caractérisée en ce que** la partie de barre (57) des rainures en forme de T (56) se situe dans un autre plan qui s'étend perpendiculairement au premier et au deuxième plan et à travers l'axe d'étendue longitudinale médian du montant de cadre (11, 12, 13, 15 ; 25, 25H).

8. Installation de commutation selon la revendication 7, **caractérisée en ce que** les rainures en forme de L (50, 51) sont pratiquées de chaque côté de la rainure en forme de T dans la troisième face latérale (45), les branches (54, 55) des rainures en forme de L (50, 51) étant tournées vers la rainure en forme de T (56) et se situant dans le plan dans lequel se trouve la barre transversale (58) de la rainure en forme de T (56).

9. Installation de commutation selon l'une quelconque des revendications précédentes, **caractérisée en ce qu'**un alésage (41) pour recevoir un élément de fixation (17, 18 ; 26) tel qu'une vis, par exemple, est prévu sur les faces frontales opposées de chaque montant de cadre.

10. Installation de commutation selon l'une quelconque des revendications précédentes, **caractérisée en ce que** dans au moins l'une des rainures en forme de L ou de T (50, 51 ; 56) peut être introduit un élément de support (60) dont une arête est coudée en forme de L, de telle sorte qu'elle puisse être introduite dans les rainures correspondantes (50, 51 ; 56).

11. Installation de commutation selon la revendication 10, **caractérisée en ce que** l'élément de support (60) est muni d'une rangée de trous pour la fixation de composants pour l'armoire de commutation .
